Europäisches Patentamt

European Patent Office

Office européen des brevets

(19)

(11) Veröffentlichungsnummer: **0 096 150**
**A2**

(12) # EUROPÄISCHE PATENTANMELDUNG

(21) Anmeldenummer: **83100999.8**

(22) Anmeldetag: **03.02.83**

(51) Int. Cl.³: **G 05 D 13/14**

---

(30) Priorität: **27.05.82 DE 3219965**

(43) Veröffentlichungstag der Anmeldung:
**21.12.83 Patentblatt 83/51**

(84) Benannte Vertragsstaaten:
**DE FR GB IT**

(71) Anmelder: **VDO Adolf Schindling AG**
**Gräfstrasse 103**
**D-6000 Frankfurt/Main(DE)**

(72) Erfinder: **Horn, Martin**
**Egerländer Strasse 32**
**D-6442 Rotenburg(DE)**

(74) Vertreter: **Könekamp, Herbert, Dipl.-Ing.**
**Sodener Strasse 9**
**D-6231 Schwalbach(DE)**

---

(54) **Vorrichtung zur Positionierung eines linear verstellbaren Stellglieds.**

(57) Die Erfindung betrifft eine Vorrichtung zur Positionierung eines linear verstellbaren Stellglieds 2 in Abhängigkeit von der Drehzahl einer um eine Drehachse 7 drehbaren Antriebswelle 4. Von der Antriebswelle 4 ist ein Rotationskörper 8 unsymmetrischer Gewichtsverteilung zur Drehachse 7 um die Drehachse 7 drehbar antreibbar. Entsprechend der Drehzahl der Antriebswelle 4 ist der Rotationskörper 8 entgegen einer Federkraft durch Fliehkraft aus einer Ruhelage um eine quer zur Drehachse 7 verlaufende Schwenkachse 9 schwenkbar. Das Stellglied 2 ist von einer mit dem Rotationskörper 8 verbundenen Stellkurve 10 mit über ihren Verlauf unterschiedlichem radialem Abstand zur die Drehachse 7 schneidenden Schwenkachse 9 beaufschlagbar.

EP 0 096 150 A2

VDO Adolf Schindling AG

Gräfstraße 103
6000 Frankfurt/Main

G-S Kl-do
B 1940
5.Mai 1982


Vorrichtung zur Positionierung eines
linear verstellbaren Stellglieds


Die Erfindung bezieht sich auf eine Vorrichtung zur Positionierung eines linear verstellbaren Stellglieds in Abhängigkeit von der Drehzahl einer um eine Drehachse drehbaren Antriebswelle, mit einem von der Antriebswelle um die Drehachse drehbar antreibbaren Rotationskörper unsymmetrischer Gewichtsverteilung zur Drehachse, der entsprechend der Drehzahl entgegen einer Federkraft durch Fliehkraft aus einer Ruhelage um eine quer zur Drehachse verlaufende Schwenkachse schwenkbar ist, wobei das Stellglied durch die Schwenkbewegung des Rotationskörpers linear verstellend beaufschlagbar ist.

Bei derartigen Vorrichtungen sind symmetrisch zur Drehachse zwei Rotationskörper jeweils um eine im Abstand der Drehachse angeordnete Schwenkachse schwenkbar. Die als zweiarmige Hebel ungleicher Gewichtsverteilung zur Schwenkachse ausgebildeten Rotationskörper, verschwenken bei Drehantrieb durch die Antriebswelle aufgrund der Fliehkraft und beaufschlagen mit ihrem einen Hebelarm axial
ein axial verschiebbares Stellglied. Eine steigende Antriebsdrehzahl führt zu einem entsprechenden Ansteigen
der Axialkraft am Stellglied und zu dessen dazu proportionaler Axialverschiebung.

Aufgabe der Erfindung ist es, eine Vorrichtung nach dem
Oberbegriff zu schaffen, die eine frei bestimmbare Stellposition und/oder Axialkraft des Stellglieds abhängig
von der Drehzahl der Antriebswelle ermöglicht.

Diese Aufgabe wird erfindungsgemäß dadurch gelöst, daß
das Stellglied von einer mit dem Rotationskörper verbundenen Stellkurve mit über ihrem Verlauf unterschiedlichem radialen Abstand zur die Drehachse schneidenden
Schwenkachse beaufschlagbar ist. Entsprechend dem Kurvenverlauf ist der am Stellglied angreifende Hebelarm des
Rotationskörpers nicht wie seither konstant, sondern
variabel. Damit kann nicht nur der axiale Bewegungsverlauf des Stellglieds variiert werden, sondern auch der
Verlauf der das Stellglied beaufschlagenden Axialkraft.
So kann z.B. über den gesamten axialen Verstellweg des
Stellglieds eine konstante Axialkraft erreicht werden,
wodurch die Drehzahl der Antriebswelle nur die Stellung
des Stellglieds beeinflußt.

Ist der radiale Abstand der Stellkurve zur Schwenkachse
über ihren Verlauf zunehmend und/oder abnehmend, so kann
der Bewegungsverlauf und die Position zu einer bestimmten Drehzahl der Antriebswelle frei gewählt werden. Die
erfindungsgemäße Ausbildung ermöglicht es, die Antriebswelle mit sehr hohen Drehzahlen anzutreiben, wobei durch
entsprechenden Verlauf der Stellkurve eine dazu erforderliche Übersetzung bei der Bewegungsübertragung auf das Stellglied erreicht wird.

Vorzugsweise ist das Stellglied mit einem an der Stellkurve anliegenden Tastelement verbunden. Ist die Stellkurve als Kurvenschlitz ausgebildet, in dem das Tastelement geführt ist, so wird das Tastelement, das ein in den Kurvenschlitz hineinragenderBolzen sein kann,in beide axialen Stellrichtungen des Stellglieds von dem Rotationskörper verstellt.

Eine einfache, zusätzliche Momentbeeinflussungen vermeidende Ausbildung wird erreicht, wenn die Anlagestelle des Tastelements an der Stellkurve auf der Drehachse des Rotationskörpers liegt.

Eine mit einfach gestalteten, wenigen Bauteilen aufgebaute und somit kostengünstig herstellbare Ausbildung wird dadurch erreicht, daß der Rotationskörper auf einem um die Drehachse drehbar antreibbaren Wellenzapfen angeordnet ist, mit dem koaxial ein das Stellglied bildende Wellenelement drehfest verbunden ist, das an seinem einen Ende das Tastelement trägt und mit seinem anderen Ende drehbar und axial verschiebbar gelagert ist.

Wellenzapfen und Wellenelement sind dabei vorzugsweise teleskopartig ineinandergreifend ausgebildet.

Ist der Rotationskörper so aufgebaut, daß er eine sich über den Verlauf seines Schwenkwegs ändernde Gewichtsverteilung zur Drehachse besitzt, ergibt sich eine weitere Variationsmöglichkeit für die drehzahl abhängige Axialkraft sowie den Bewegungsverlauf des Stellglieds. Sind die Massen des Rotationskörpers zu beiden Seiten der Drehachse, so können durch die Schwenkbewegung des Rotationskörpers Teile der auf einer Seite der Drehachse liegenden Masse auf die andere Seite der Drehachse wandern. Entsprechend der unterschiedlichen Verteilung der Massen, kann man dabei erreichen, daß die Änderung der Gewichtsverteilung über den Verlauf des Schwenkwegs zumindest teilweise unlinear ist.

Einfach herstellbar ist der Rotationskörper, wenn er scheibenartig mit quer zur Schwenkachse verlaufender Ebene ausgebildet ist. Vorzugsweise ist er dabei symmetrisch zur Schwenkachse ausgebildet. Dazu sind die Produkte aus Masse und ihrem Schwerpunktsabstand zur Drehachse zu beiden Seiten der Drehachse gleich.

Ein Ausführungsbeispiel der Erfindung ist in der Zeichnung dargestellt und wird im folgenden näher beschrieben. Es zeigen

Figur 1    ein Stellantrieb mit einer er-
           findungsgemäßen Vorrichtung in
           der Seitenansicht

Figur 2    ein Schnitt entlang der Linie II-II

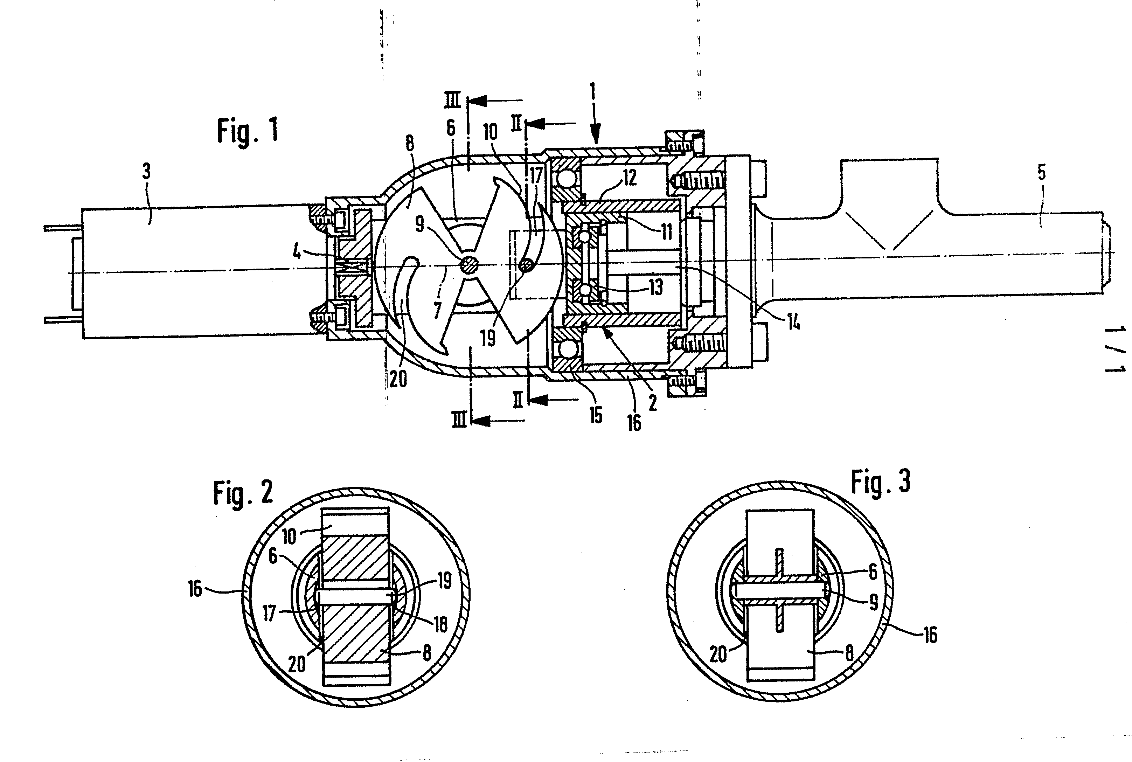

           in Figur 1

Figur 3    ein Schnitt entlang der Linie
           III-III in Figur 1

In Figur 1 ist die Vorrichtung 1 zur Positionierung eines linear verstellbaren Stellgliedes 2 in Längsschnitt dargestellt, wohingegen ein Elektromotor 3 zum Drehantrieb einer Antriebswelle 4 sowie ein Hydraulikzylinder 5 ungeschnitten dargestellt sind.

Durch die Antriebswelle 4 ist ein damit koaxial verbundener Wellenzapfen 6 um die Drehachse 7 drehbar antreibbar, auf dem ein Rotationskörper 8 um eine die Drehachse 7 rechtwinklig schneidende Schwenkachse 9 schwenkbar ist.

Über eine als Kurvenschlitz ausgebildete Stellkurve 10 des Rotationskörpers 8 ist auf einer im späteren beschriebene Weise das Stellglied 2 axial verschiebbar.

Das Stellglied 2 besteht aus einem zylindrischen Führungsteil 11, das in einer Zylinderführung 12 axial verschiebbar angeordnet ist. Über ein Axiallager 13 ist das Führungsteil 11 an dem dem Wellenzapfen 6 abgewandten Ende an der koaxial zur Drehachse 7 angeordneten Kolbenstange 14 des Hydraulikzylinders 5 abgestützt. Die Zylinderführung 12 ist über ein Radiallager 15 im Gehäuse 16 der Vorrichtung 1 drehbar gelagert. Somit kann sich das Stellgied 2 sowohl um die Drehachse 7 drehen als auch dazu sich koaxial verschieben und damit den Hydraulikzylinder 5 betätigen.

Das Stellglied 2 besitzt weiterhin ein Wellenelement 17, das teleskopartig in eine Sackbohrung 18 des Wellenzapfens 6 hineinragt. Ein als Tastelement 19 dienender Bolzen ist die Drehachse 7 schneidend im Wellenelement 17 befestigt. Der Rotationskörper 8 ist scheibenartig ausgebildet und in einem mittigen Längsschlitz 20 angeordnet, der in Wellenzapfen 6 und Wellenelement 17 ausgebildet ist.

Das bolzenartige Tastelement 19 durchragt dabei die Stellkurve 10 des Rotationskörpers 8. Da das Tastelement 19 in der Stellkurve 10 geführt ist, fährt bei Verschwenken des Rotationskörpers 8 das Tastelement 19 an der Stellkurve 10 entlang und wird bei Verschwenken im Uhrzeigersinn durch den sich vergrößernden Abstand der Stellkurve 10 von der Schwenkachse 9 nach rechts bewegt.

Durch die Befestigung des Tastelements an dem Wellenelement 17 des Stellglieds 2 wird dieses dabei ebenfalls nach rechts verschoben und die Kolbenstange 14 des Hydraulikzylinders 5 entsprechend bewegt.

Die Gewichtsverteilung des Rotationskörpers 8 ist in bezug auf die Drehachse 7 unsymmetrisch.Dies führt dazu, daß sich der Rotationskörper 8 bei einer Drehbewegung um die Drehachse 7 aus der dargestellten Ruhestellung nach rechts verdreht, da sein Massenschwerpunkt dabei aufgrund der Fliehkraft entgegen einer Federkraft radial nach außen wandert. Je höher dabei die Drehzahl der Drehbewegung des Rotationskörpers 8 um die Drehachse 7 ist, um so größer ist die Fliehkraft und damit die Verdrehung des Rotationskörpers 8 um die Schwenkachse 9. Diese entgegengerichtete Federkraft wird durch eine nicht dargestellte Druckfeder erzeugt, die im Hydraulikzylinder 5 angeordnet ist und dessen Kolben nach links  und damit den Rotationskörper 8 entgegen dem Uhrzeigersinn beaufschlagt.

VDO Adolf Schindling AG      - 1 -      Gräfstraße 103
                                        6000 Frankfurt/Main

                                        G-S Kl-do
                                        B 1940
                                        5.Mai 1982


Patentansprüche


1. Vorrichtung zur Positionierung eines linear verstellbaren Stellglieds in Abhängigkeit von der Drehzahl einer um eine Drehachse drehbaren Antriebswelle, mit einem von der Antriebswelle um die Drehachse drehbar antreibbaren Rotationskörper unsymmetrischer Gewichtsverteilung zur Drehachse, der entsprechend der Drehachse entgegen einer Federkraft durch Fliehkraft aus einer Ruhelage um eine quer zur Drehachse verlaufende Schwenkachse schwenkbar ist, wobei das Stellglied durch die Schwenkbewegung des Rotationskörpers linear verstellend beaufschlagbar ist, dadurch gekennzeichnet, daß das Stellglied (2) von einer mit dem Rotationskörper (8) verbundenen Stellkurve (10) mit über ihrem Verlauf unterschiedlichem radialem Abstand zur die Drehachse (7) schneidenden Schwenkachse (9) beaufschlagbar ist.

2. Vorrichtung nach Anspruch 1, dadurch gekennzeichnet, daß der radiale Abstand der Stellkurve (10) zur Schwenkachse (9) über ihren Verlauf zunehmend und/oder abnehmend ist.

3. Vorrichtung nach einem der vorhergehenden Ansprüche, dadurch gekennzeichnet, daß das Stellglied (2) mit einem an der Stellkurve (10) anliegenden Tastelement (19) verbunden ist.

4. Vorrichtung nach Anspruch 3, dadurch gekennzeichnet, daß die Stellkurve (10) als Kurvenschlitz ausgebildet ist, in dem das Tastelement (19) geführt ist.

5. Vorrichtung nach Anspruch 3, dadurch gekennzeichnet, daß die Anlagestelle des Tastelements (19) an der Stellkurve (10) auf der Drehachse (7) des Rotationskörpers (8) liegt.

6. Vorrichtung nach einem der vorhergehenden Ansprüche, dadurch gekennzeichnet, daß der Rotatiosnkörper (8) auf einem um die Drehachse (7) drehbar antreibbaren Wellenzapfen (6) angeordnet ist, mit dem koaxial ein das Stellglied (2) bildende Wellenelement (17) drehfest verbunden ist, das an seinem einen Ende das Tastelement (19) trägt und mit seinem anderen Ende drehbar und axial verschiebbar gelagert ist.

7. Vorrichtung nach Anspruch 6, dadurch gekennzeichnet, daß Wellenzapfen (6) und Wellenelement (17) tele-skopartig ineinandergreifen.

8. Vorrichtung nach einem der vorhergehenden Ansprüche, dadurch gekennzeichnet, daß der Rotationskörper (8) eine sich über den Verlauf seines Schwenkwegs ändernde Gewichtsverteilung zur Drehachse (7) besitzt.

9. Vorrichtung nach Anspruch 8, dadurch gekennzeichnet, daß die Änderung der Gewichtsverteilung über den Verlauf des Schwenkwegs zumindest teilweise unlinear ist.

10. Vorrichtung nach einem der vorhergehenden Ansprüche, dadurch gekennzeichnet, daß der Rotationskörper (8) scheibenartig mit quer zur Schwenkachse (7) verlaufender Ebene ausgebildet ist.

11. Vorrichtung nach Anspruch 10, dadurch gekennzeichnet, daß der Rotationskörper (8) symmetrisch zur Schwenkachse (9) ausgebildet ist.

Fig. 1

Fig. 2

Fig. 3